# EUROPEAN PATENT SPECIFICATION

(11) **EP 1 922 936 B1**
(45) Date of publication and mention of the grant of the patent: **02.03.2011**
(21) Application number: 06425746.2
(22) Date of filing: 30.10.2006
(51) Int. Cl.: A23C 19/16

(54) **An aqueous dispersion and its use for the anti-mould treatment of rinded cheese**
Wässrige Dispersion und deren Verwendung zur schimmelvermeidenden Behandlung von Käserinde
Dispersion aqueuse et son utilisation pour le traitment anti-moisissures de la croûte de fromage

(43) Date of publication of application: 21.05.2008
(73) Proprietor: Agpolymer S.a.s. di Vittorio Capra e C., 10131 Torino (IT)
(72) Inventor: Capra, Vittorio, 10131 Torino (IT)
(74) Representative: Gerbino, Angelo

(56) References cited:
- EP-A1- 1 051 903
- GB-A- 771 400
- GB-A- 190 016 169
- US-A- 3 192 057
- DE RUIG W: "Influence of the fungicides sorbate and natamycin in cheese coatings on the quality of cheese" NETHERLANDS MILK AND DAIRY JOURNAL, PUDOC. WAGENINGEN, NL, vol. 39, no. 3, 1985, pages 165-172, XP002144053 ISSN: 0028-209X
- YANKOV YA ET AL: "Testing some fungicides for inhibitory effects on mould growth on cheeses" INTERNATIONAL FOOD I, 1970, XP002130467
- DAAMEN C B G ET AL: "VOORKOMING VAN SCHIMMELGROEI OP DE KORST VAN KAAS MET BEHULP VAN NATAMYCINE PREVENTION OF MOULD GROWTH ON CHEESE BY MEANS OF NATAMYCIN" VOEDINGSMIDDELENTECHNOLOGIE, KEESING NOORDERVLIET B.V., ZEIST, NL, vol. 2, no. 18, 24 January 1985 (1985-01-24), pages 26-29, XP001077010 ISSN: 0042-7934

## Description

The present invention relates to the field of the treatment of rinded cheeses and, in particular, to the prevention of the formation of moulds on their surface.

In this connection it is known to treat such cheeses with aqueous solutions containing organic active ingredients, in particular of the antibiotic type such as, for example, pimaricin E235, or sorbic acid. However, once these organic active ingredients have been applied to the surface of a cheese, they tend to migrate to its interior, adversely affecting the organoleptic properties of the cheese and giving rise to possible risks to the consumer.

XP 002144053 discloses the use of fungicides for inhibiting mould growth on cheese.

The object of the present invention is to overcome the above-mentioned problems of the prior art.

This object is achieved by virtue of an aqueous dispersion for the treatment of rinded cheeses comprising, with reference to 100 parts of water:
- from 1 to 150 parts of at least one polymer the monomeric units of which are selected from the group consisting of ethylene, vinyl and acrylic esters of saturated fatty acids having from 2 to 16 carbon atoms, vinyl versatate, and maleic and formic acid esters of saturated alcohols having from 4 to 8 carbon atoms, and
- from 0.01 to 5 parts of an ion-exchange zeolite containing silver and/or copper ions.

The polymer will thus be a homopolymer when all of the monomeric units on the basis of which the polymerization reaction is performed are identical, or a copolymer when the monomeric units are of two or more different types.

A further subject of the present invention is a process for the treatment of a rinded cheese, comprising a step consisting of the formation of a film coating of the cheese with the use of a dispersion of the above-mentioned type.

Yet another subject of the present invention is a rinded cheese coated with a film comprising a polymer the monomeric units of which are selected from the group consisting of ethylene, vinyl and acrylic esters of saturated fatty acids having from 2 to 16 carbon atoms, vinyl versatate, and maleic and formic acid esters of saturated alcohols having from 4 to 8 carbon atoms, and an ion-exchange zeolite containing silver and/or copper ions, the coated cheese being obtainable as a result of the implementation of the above-described method.

The active ingredient of the dispersions of the invention, which prevents the formation of moulds in particular, is constituted by the silver and/or copper ions which do not tend to migrate into the cheeses treated, thus avoiding the problems resulting from the use of the organic active ingredients of the prior art. Moreover, this advantageous property of the active ingredient of the invention exempts the producer and/or marketer of the cheese thus treated from the obligation to declare its presence on the label.

The dispersion preferably contains from 6 to 100 parts of the polymer and from 0.1 to 2 parts of the zeolite, with reference to 100 parts of water. The polymer may be used in the form of a dispersion in water or in polar solvents in general. The zeolite, for its part, preferably contains from 0.3 to 3% by weight of silver and/or copper ions.

As already indicated, the dispersion of the invention is used in the step consisting of the formation of a film coating of a rinded cheese which takes place in the course of a cheese treatment process. In principle, the methods of implementing the film-forming step are not subject to any particular limitations.

For example, the cheese may be immersed in the dispersion for a period of between 1 and 5 seconds, the dispersion being kept at a temperature of between 10 and 25°C. Alternatively, the dispersion may be applied to the surface of the cheese by means of brushes, felt pads, or similar tools.

The step consisting of the formation of the coating film typically terminates with a period of drying of the water that was initially present in the dispersion. A step consisting of maturation of the coated cheese advantageously takes place after the step consisting of the formation of the coating film. The maturation step usually has a duration of between 10 and 365 days and takes place at a temperature of between 2 and 7°C and with a relative humidity of between 80 and 90%. If necessary, the step of immersion in or application of the dispersion and the subsequent drying may also be repeated several times in the course of the maturation step.

Upon completion of the treatment process of the invention, the cheese has conventional organoleptic properties and, moreover, has no surface mould. The anti-mould properties also persist during the subsequent storage period by virtue of the fact that the antibacterial activity of the silver and/or copper ions incorporated in the coating film remain unchanged for long periods of time.

Further advantages and characteristics of the present invention will become clear from the following examples of the composition of a dispersion and of the methods for the use thereof, which are provided by way of non-limiting example. All of the percentages mentioned should be understood as percentages by weight unless indicated otherwise.

### Example 1

A dispersion was formed by mixing the following ingredients in the percentages by weight indicated:
- Vinavil® CF5 (aqueous dispersion of vinyl acetate and butyl maleate having a 50% solids content) 10%,
- Agion®AJ 10D (zeolite containing 2.5% of silver ions) 1%,
- water 89%.

The dispersion was used to form a bath which was kept at ambient temperature. A Provolone cheese which, after production, had been dried until the rind had adopted a straw-yellow colour, was immersed in the bath for a period of 2-3 seconds.

After immersion in the bath, the cheese was dried and then subjected to maturation for about 30 days in a well-aerated cell kept at a temperature of between 2 and 7°C. Upon completion of the maturation, the cheese had a coating film which rendered it free of mould as well as of superficial bacterial loads and viruses.

### Example 2

A dispersion was formed by mixing the following ingredients in the percentages by weight indicated:
- Vinavil® CF5 (aqueous dispersion of vinyl acetate and butyl maleate having a 50% solids content) 94.8%,
- Agion® AJ 10D (zeolite containing 2.5% of silver ions) 0.2%,
- water 5%.

The dispersion was applied by means of a brush at ambient temperature to a Caciotta cheese which, after production, had been dried until the rind had adopted a straw-yellow colour.

After this treatment, the cheese was dried and then subjected to maturation for a period of about 12 months at a temperature of between 2 and 7°C. The application of the dispersion may be repeated several times during the first months of maturation.

Upon completion of the maturation, the cheese had a coating film which rendered it free of mould as well as of superficial bacterial loads and viruses.

Naturally, the principle of the invention remaining the same, the details of implementation and forms of embodiment may be varied widely with respect to those described purely by way of example without thereby departing from the scope claimed. In particular, a dispersion of the invention may comprise, in addition to the ingredients specified above, also organic ingredients such as, for example, pimaricin E235 and/or sorbic acid which would in any case be present in smaller quantities than those provided for by the prior art, with a corresponding reduction in the adverse effects typically associated therewith. If necessary, the dispersion of the invention may also comprise desired conventional additives, for example, colorants.

## Claims

1. An aqueous dispersion for the treatment of rinded cheeses, comprising, with reference to 100 parts of water:
- from 1 to 150 parts of a polymer the monomeric units of which are selected from the group consisting of ethylene, vinyl and acrylic esters of saturated fatty acids having from 2 to 16 carbon atoms, vinyl versatate, and maleic and formic acid esters of saturated alcohols having from 4 to 8 carbon atoms, and
- from 0.01 to 5 parts of an ion-exchange zeolite containing silver and/or copper ions.

2. A dispersion according to Claim 1, containing from 6 to 100 parts of the polymer.

3. A dispersion according to any one of the preceding claims, containing from 0.1 to 2 parts of the zeolite.

4. A dispersion according to any one of the preceding claims in which the zeolite contains from 0.3 to 3% by weight of silver ions.

5. A process for the treatment of a rinded cheese which comprises a step consisting of the formation of a film coating of the cheese with the use of a dispersion according to any one of the preceding claims, the film comprising a polymer and an ion-exchange zeolite containing silver and/or copper ions.

6. A process according to Claim 5 in which the rinded cheese is immersed in the dispersion.

7. A process according to Claim 6 in which the rinded cheese is immersed in the dispersion for a period of between 1 and 5 seconds.

8. A process according to Claim 6 or Claim 7 in which the dispersion is kept at a temperature of between 10 and 25°C.

9. A process according to Claim 6 in which the dispersion is applied to the surface of the rinded cheese.

10. A process according to any one of Claims 5 to 9 in which the step consisting of the formation of the coating film concludes with a drying period and in which, after the formation step, a step consisting of maturation of the cheese takes place.

11. A process according to Claim 10 in which the maturation step has a duration of between 10 and 365 days.

12. A process according to Claim 10 or Claim 11 in which the maturation step is performed at a temperature of between 2 and 7°C.

13. A rinded cheese, coated with a film comprising a polymer the monomeric units of which are selected from the group consisting of ethylene, vinyl and acrylic esters of saturated fatty acids having from 2 to 16 carbon atoms, vinyl versatate, and maleic and formic acid esters of saturated alcohols having from 4 to 8 carbon atoms, and an ion-exchange zeolite containing silver and/or copper ions, the coated cheese being obtainable as a result of the implementation of the process of any one of preceding Claims 5 to 12.

## Patentansprüche

1. Wässrige Dispersion für die Behandlung von Käse mit Rinde umfassend, in Bezug auf 100 Teile Wasser:
- von 1 bis 150 Teile eines Polymers, wobei die monomeren Einheiten davon ausgewählt sind aus der Gruppe bestehend aus Ethylen, Vinyl- und Acrylestern von gesättigten Fettsäuren mit von 2 bis 16 Kohlenstoffatomen, Vinylversatat und Malein- und Ameisensäureestern von gesättigten Alkoholen mit von 4 bis 8 Kohlenstoffatomen und
- von 0,01 bis 5 Teile eines lonenaustausch-Zeoliths, das Silber- und/oder Kupferionen enthält.

2. Dispersion gemäß Anspruch 1 enthaltend von 6 bis 100 Teile des Polymers.

3. Dispersion gemäß einem der vorhergehenden Ansprüche enthaltend von 0,1 bis 2 Teile des Zeoliths.

4. Dispersion gemäß einem der vorhergehenden Ansprüche, in der der Zeolith von 0,3 bis 3 Gewichts-% Silberionen enthält.

5. Verfahren für die Behandlung von einem Käse mit Rinde, welches einen Schritt umfasst, der aus der Bildung einer Filmbeschichtung des Käses durch die Verwendung einer Dispersion gemäß einem der vorhergehenden Ansprüche besteht, wobei der Film ein Polymer und ein lonenaustausch-Zeolith, das Silber- und/oder Kupferionen enthält, umfasst.

6. Verfahren gemäß Anspruch 5, in dem der Käse mit Rinde in die Dispersion eingetaucht wird.

7. Verfahren gemäß Anspruch 6, in dem der Käse mit Rinde in die Dispersion für eine Dauer von zwischen 1 und 5 Sekunden eingetaucht wird.

8. Verfahren gemäß Anspruch 6 oder Anspruch 7, in dem die Dispersion bei einer Temperatur von zwischen 10 und 25 °C gehalten wird.

9. Verfahren gemäß Anspruch 6, in dem die Dispersion auf die Oberfläche des Käses mit Rinde aufgetragen wird.

10. Verfahren gemäß einem der Ansprüche 5 bis 9, in dem der Schritt bestehend aus der Bildung des Beschichtungsfilms mit einer Trocknungsdauer abschließt und in dem, nach dem Bildungsschritt, ein Schritt bestehend aus der Reifung des Käses erfolgt.

11. Verfahren gemäß Anspruch 10, in dem der Reifungsschritt eine Zeitdauer von zwischen 10 und 365 Tagen aufweist.

12. Verfahren gemäß Anspruch 10 oder Anspruch 11, in dem der Reifungsschritt bei einer Temperatur von zwischen 2 und 7 °C durchgeführt wird.

13. Käse mit Rinde, der mit einem Film umfassend ein Polymer, wobei die monomeren Einheiten davon ausgewählt sind aus der Gruppe bestehend aus Ethylen, Vinyl- und Acrylestern von gesättigten Fettsäuren mit von 2 bis 16 Kohlenstoffatomen, Vinylversatat und Malein- und Ameisensäureestern von gesättigten Alkoholen mit von 4 bis 8 Kohlenstoffatomen und einem Ionenaustausch-Zeolith, das Silber- und/oder Kupferionen enthält, beschichtet ist, wobei der beschichtete Käse als ein Ergebnis der Implementierung des Verfahrens gemäß einem der vorhergehenden Ansprüche 5 bis 12 erhalten wird.

## Revendications

1. Dispersion aqueuse pour le traitement de croûtes de fromage, comprenant, pour 100 parties d'eau :
- de 1 à 150 parties d'un polymère dont les motifs monomères sont choisis dans le groupe constitué par l'éthylène, les esters de vinyle et acryliques d'acides gras saturés comportant de 2 à 16 atomes de carbone, le versatate de vinyle, les esters d'acide malique et formique d'alcools saturés comportant de 4 à 8 atomes de carbone ; et
- de 0,01 à 5 parties d'une zéolite échangeuse d'ions contenant des ions argent et/ou cuivre.

2. Dispersion selon la revendication 1, contenant de 6 à 100 parties du polymère.

3. Dispersion selon l'une quelconque des revendications précédentes, contenant de 0,1 à 2 parties de la zéolite.

4. Dispersion selon l'une quelconque des revendications précédentes, dans laquelle la zéolite contient de 0,3 à 3 % en poids d'ions argent.

5. Procédé de traitement d'une croûte de fromage qui comprend l'étape consistant en la formation d'un revêtement pelliculaire du fromage à l'aide d'une dispersion selon l'une quelconque des revendications précédentes, la pellicule comprenant un polymère et une zéolite échangeuse d'ions contenant des ions argent et/ou cuivre.

6. Procédé selon la revendication 5, dans lequel la croûte de fromage est immergée dans la dispersion.

7. Procédé selon la revendication 6, dans lequel la croûte de fromage est immergée dans la dispersion pendant une durée comprise entre 1 et 5 secondes.

8. Procédé selon la revendication 6 ou la revendication 7, dans lequel la dispersion est maintenue à une température comprise entre 10 et 25 °C.

9. Procédé selon la revendication 6, dans lequel la dispersion est appliquée sur la surface de la croûte de fromage.

10. Procédé selon l'une quelconque des revendications 5 à 9, dans lequel l'étape consistant en la formation du film de pelliculage se conclut par une période de séchage et dans lequel, après l'étape de formation, a lieu une étape consistant en la maturation du fromage.

11. Procédé selon la revendication 10, dans lequel l'étape de maturation a une durée comprise entre 10 et 365 jours.

12. Procédé selon la revendication 10 ou la revendication 11, dans lequel l'étape de maturation est effectuée à une température comprise entre 2 et 7 °C.

13. Croûte de fromage, revêtu d'une pellicule comprenant un polymère dont les motifs monomères sont choisis dans le groupe constitué par l'éthylène, les esters de vinyle et acryliques d'acides gras saturés comportant de 2 à 16 atomes de carbone, le versatate de vinyle, et les esters d'acide malique et formique d'alcools saturés comportant de 4 à 8 atomes de carbone, et une zéolite échangeuse d'ions contenant des ions argent et/ou cuivre, le fromage revêtu pouvant être obtenu en mettant en oeuvre le procédé selon l'une quelconque des revendications précédentes 5 à 12.
